Europäisches Patentamt

European Patent Office

Office européen des brevets

(11) Publication number: 0 179 029
A1

# EUROPEAN PATENT APPLICATION

(21) Application number: 85850234.7

(22) Date of filing: 10.07.85

(51) Int. Cl.⁴: **B 02 C 7/14**
**G 01 B 7/14**

(30) Priority: 15.08.84 SE 8404100

(43) Date of publication of application:
23.04.86 Bulletin 86/17

(84) Designated Contracting States:
AT DE FR GB SE

(71) Applicant: SUNDS DEFIBRATOR AKTIEBOLAG

S-851 94 Sundsvall(SE)

(72) Inventor: Kjellqvist, Olof
Helgavägen 5
S-183 42 Täby(SE)

(72) Inventor: Sjöbom, Axel
13735 N.E. 11th St. Z-4
Bellevue, WA 98005(US)

(72) Inventor: Akerblom, Bengt
Vidholmsbackarna 6
S-162 40 Vällingby(SE)

(74) Representative: Illum, Leif-Otto
Svenska Cellulosa Aktiebolaget SCA Kungsgatan 33
S-111 56 Stockholm(SE)

(54) A device for measuring the grinding gap between two grinding discs in a disc refiner.

(57) In a refiner with width of the gap (8) is indicated by a transmitter (10) located in one (4) of two counter-rotating refiner discs (4, 5). The indicating device operates according to the reluctance method, and electric effect is transferred contact-free to the transmitter (10) via one axle (2) through a transformer coupling (15, 17, 18, 20). The measurement signal from the transmitter (10) is transferred contact-free from a transmitting means (22, 23) on the axle (2) to a stationary receiver means (21, 24).

FIG.1

Croydon Printing Company Ltd.

EP 0 179 029 A1

Disc gap indication device

This invention relates to refiners for lignocellulose-containing material and, more precisely, is directed to a device for measuring the gap between two counter-rotating refiner discs in the refiner.

In SE-PS 7904903-7 a method and a device for indicating the gap width between the refiner discs in a refiner by means of reluctance measurement are described. The object is to prevent metallic contact between the refiner discs. A transmitter defined in greater detail in said patent specification is inserted in the surface of one of the refiner discs.

In order to achieve optimum measurement results, the transmitter is formed as an integral part of the refiner disc surface, so that the transmitter is worn in pace with the beating surface, whereby all the time the real distance between the refiner discs is indicated. The transmitter depends on current supply for its function. Measurement test results, besides, must be transferred from the transmitter to a receiver.

The aforesaid arrangement can be applied easily to a refiner, at which one disc rotates and the second disc is stationary. The transmitter is then placed on the stationary disc, whereby no problems arise in respect of current supply or measurement signals. In a refiner comprising two counter-rotating refiner discs, however, problems arise at the transfer of electric effect and measurement signals between the transmitter of the rotary disc and the stationary parts of the refiner.

According to the present invention, this problem is solved, in that contact-free transfer is provided between the axle of the refiner disc and the refiner stand. The characterizing features of the invention are defined in the attached claims.

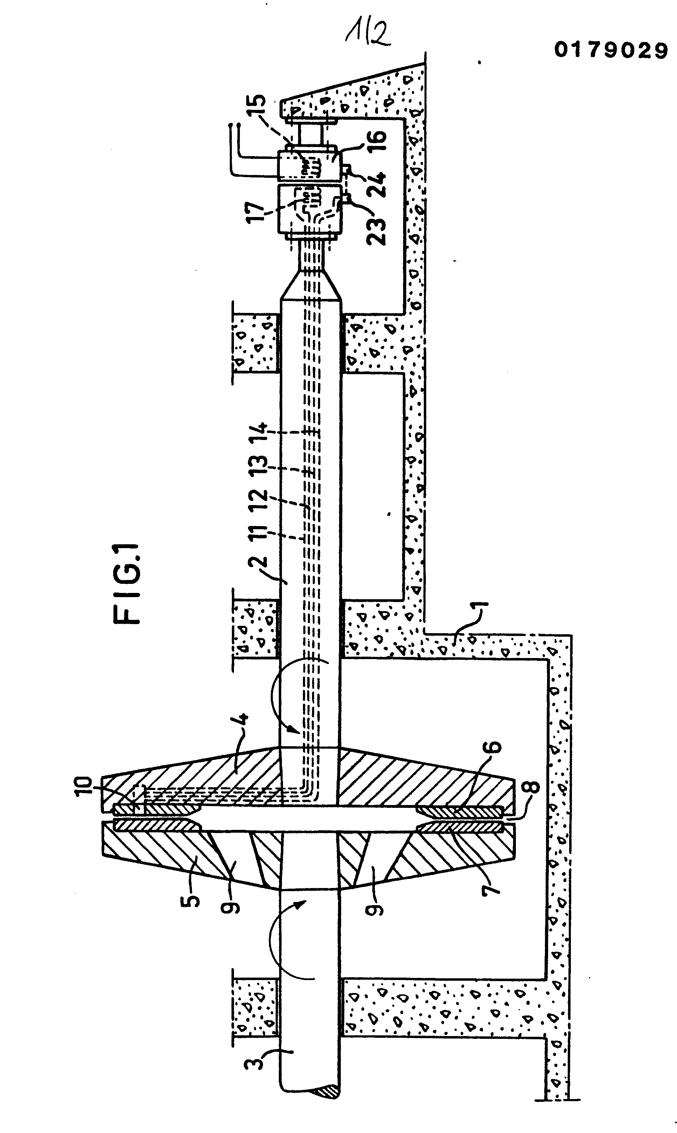

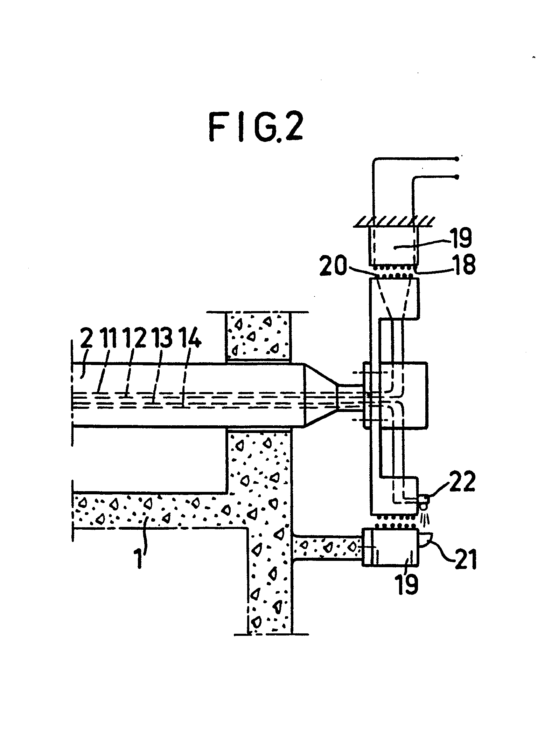

The invention is described in greater detail in the following, with reference to the embodiments illustrated in the accompanying drawings, in which Fig. 1 shows schematically one embodiment of the invention, and Fig. 2 shows an alternative embodiment.

The embodiment illustrated in Fig. 1 comprises a stand 1, which carries two rotatable axles 2 and, respectively, 3, each of which is provided with a refiner disc 4 and, respectively, 5. On said discs 4,5 beating members 6 and, respectively, 7 are mounted so that a gap 8 is defined between the discs. In one of the refiner discs, 5, apertures 9 are provided for the supply of the lignocellulose-containing material, which is intended to be refined while passing outward through said gap between the counter-rotating discs 4,5.

In the refiner disc 4 a transmitter 10 for gap indication is provided. The transmitter 10 is located in a beating member 6 as an integrated part of the surface thereof, so that the transmitter is subjected to wear to the same degree as the beating member 6. By this arrangement it is possible at any moment to measure the real gap, which is a prequisite for preventing metallic contact between the refiner discs. A transmitter, which is particularly suitable for this purpose, is described in SE-PS 7904903-7.

The transmitter 10 receives its effect supply via lines 11,12, which are drawn through the axle 2, and so are also lines 13,14 for the measurement signals. The effect transfer is carried out by means of a transformer coupling, where the effect is transferred from a wire winding 15 flown through by current in a stator 16 to a concentric wire winding 17 in connection to the axle 2. The effect transfer takes place inductively without contact between the axle 2 and stator 16. According to Fig. 2, the wire winding 18 in a stator 19 is located radially outside the rotating wire winding 20.

The embodiment shown in Fig. 1 is suitable for use in cases when the end of the axle 2 is free. At the embodiment shown in Fig. 2 the transfer can be made in a position along the axle 2. This embodiment can be suitable for use at long axles.

The transfer of measurement signals from the transmitter 10 via the lines 13,14 can be effected in many different ways, for example optically, magnetically, by radio signals, acoustic signals a.s.o. The essential feature is that the transfer takes place free of contact so as not to affect the measurement accuracy.

In Fig. 2 an example of optical transfer is shown. A photo-diod 21 is located on the stator 19 to scan the light from a number of dim glowing lamps 22, which are positioned so as to rotate with the axle and cover the entire revolution. The measurement signal can control the frequency, which ignites and extinguishes the lamps. The photo-diod 21 then intercepts the frequency, which implies that the measurement signal has been transferred free of contact. In a corresponding manner, also other combinations of transmitter 23 and receiver 24 can be arranged according to the invention, as indicated in Fig. 1.

The invention, of course, is not restricted to the embodiments described above, but can be varied within the scope of the invention idea.

## Claims

1.    A device for indicating the gap between two counter-
rotating refiner discs  located each on a rotatable axle
in a refiner for lignocellulose-containing material, which
device operates according to the reluctance method and
comprises a transmitter (10) located as an integrated part
in the beating surface of one refiner disc (4),
c h a r a c t e r i z e d   i n   that it comprises a
transformer coupling (15,17,18,20) for contact-free transfer of electric effect to the transmitter (10) via one
axle (2), and a transmitting means (22,23) on said axle
(2) and a stationary receiver means (21,24) for contact-
free transfer of measurement signals from the transmitter
(10).

2.    A device as defined in claim 1, c h a r a c t e r -
i z e d   i n   that the transformer coupling comprises
a wire winding (17) at the end of one axle (2) and a
stationary wire winding (15) axially spaced from the
axle end.

3.    A device as defined in claim 1, c h a r a c t e r -
i z e d   i n   that the transformer coupling comprises
a wire winding (20) in connection to one axle (2) and
a stationary wire winding (18) radially spaced from the
axle (2).

4.    A device as defined in any one of the preceding
claims, c h a r a c t e r i z e d   i n   that the transmitting means consists of a plurality of lamps (22)
located about the axle, which lamps are controlled by a
measurement signal with variable frequency, and that
the receiver means is a photo-diod (21).

FIG.1

0179029

# FIG.2

European Patent Office

**EUROPEAN SEARCH REPORT**

Application number

EP 85 85 0234.7

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | SE-B- 401 896 (PAK CONSTRUCTION AB) <br><br> --- | 1 | B 02 C 7/14, G 01 B 7/14 |
| A | SE-B- 414 457 (ASEA AB) <br><br> --- | 1 | |
| A | US-A-2 548 599 (D. E. GARR) <br> * Column 2, lines 20-41* <br><br> --- | 1 | |
| A, D | US-A-4 387 339 (B. O. ÅKERBLOM) <br> & SE-B- 416 844 <br><br> ----- | 1 | |
| | | | **TECHNICAL FIELDS SEARCHED (Int Cl.4)** <br><br> B 02 C <br> G 01 B |

The present search report has been drawn up for all claims

| Place of search | Date of completion of the search | Examiner |
|---|---|---|
| STOCKHOLM | 04-11-1985 | KORN K. C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82